(19) **Europäisches Patentamt**
**European Patent Office**
**Office européen des brevets**

(11) **EP 1 756 483 B1**

(12) **EUROPEAN PATENT SPECIFICATION**

(45) Date of publication and mention
of the grant of the patent:
**05.03.2008 Bulletin 2008/10**

(51) Int Cl.:
**F24F 11/00** (2006.01)   **F25B 49/02** (2006.01)

(21) Application number: **05758812.1**

(22) Date of filing: **08.06.2005**

(86) International application number:
**PCT/US2005/020030**

(87) International publication number:
**WO 2005/124242 (29.12.2005 Gazette 2005/52)**

(54) **ENERGY COST ANALYZER FOR A REFRIGERATION SYSTEM**

ENERGIEKOSTENANALYSATOR FÜR EIN KÜHLSYSTEM

ANALYSEUR DU COUT EN ENERGIE D'UN SYSTEME DE REFRIGERATION

(84) Designated Contracting States:
**DE FR GB**

(30) Priority: **09.06.2004 US 864895**

(43) Date of publication of application:
**28.02.2007 Bulletin 2007/09**

(73) Proprietor: **YORK INTERNATIONAL CORPORATION**
**York, PA 17403-3445 (US)**

(72) Inventors:
• **MILLER, Wanda, Jean**
**Harrisburg, PA 17110 (US)**

• **HUBBARD, Roy, Samuel, Jr.**
**York, PA 17402 (US)**

(74) Representative: **Wolff, Felix et al**
**Kutzenberger & Wolff**
**Theodor-Heuss-Ring 23**
**50668 Köln (DE)**

(56) References cited:
**EP-A- 0 895 038          US-A- 4 439 997**
**US-A- 4 745 758          US-A- 6 145 328**
**US-A1- 2003 070 438**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates generally to an energy analyzer, and more particularly to an energy analyzer for use with a refrigeration system incorporating a fixed or constant speed drive to provide an estimate of the operating cost savings of a refrigeration system incorporating a variable speed drive when compared to the fixed or constant speed drive (see for example patent document US-A-6145328).

BACKGROUND OF THE INVENTION

Refrigerant systems, such as a chiller system, can be driven by compressors that operate at a substantially constant speed to compress refrigerant vapor for circulation in a refrigerant circuit including a condenser and an evaporator to provide cooling to an interior space. A chiller system's performance is designed to achieve a rated capacity at a rated head while expending a predetermined amount of energy. For example, a chiller system having a rated 400 ton cooling capacity at a rated 85°F entering condenser water temperature ("ECWT") would be able to achieve 400 tons of cooling at a predetermined energy rate, such as 250 kW. By operating the compressor at a constant speed using a constant speed drive ("CSD"), the compressor expends more energy than required to satisfy the cooling load and head when the cooling load and head is less than the rated capacity of the compressor. The amount of wasted energy resulting from lower cooling loads and lower heads can be substantial.

The introduction of variable speed drives ("VSDs") to drive compressor motors permits the compressor motors to be operated at variable speeds in response to variable cooling loads and variable cooling heads. For example, in response to a reduced cooling load, the VSD reduces the operating speed of the compressor motor, likewise reducing the cooling provided by the refrigerant system to satisfy the reduced cooling load. Speed can also be reduced in response to lower heads (reduced wet bulb outside temperature) even if the system is operating at full capacity. Reducing the operating speed of the compressor motor reduces the amount of energy required to operate the compressor, resulting in an energy savings. These savings may be significant, typically requiring only a few years of operation for the energy savings to pay for the cost of installing a VSD to replace the existing CSD in a refrigerant system.

One way to encourage owners of refrigerant systems to install VSDs is for an installer to form an arrangement with the owner wherein the VSD is installed on the owner's refrigerant system at little or no cost to the owner. The installer would be provided a percentage of cost savings realized by operation of the refrigerant system for a predetermined time period to recoup the cost of the VSD and its installation. However, calculation of the cost savings is not easily accomplished. First of all, because the CSD has been removed, the direct means to measure the energy costs associated with operation of the CSD no longer exists. Second, because speed of the compressor motor the VSD, as its name implies, is constantly changing, the operation of the VSD does not lend itself to comparing the costs associated with operating the CSD versus the VSD.

An alternate way to encourage owners of refrigerant systems to install VSDs is for an installer to mount an analyzer to the refrigerant system showing the potential cost savings between operating the VSD versus the CSD without installing the VSD. However, as previously discussed, this comparison is not easily performed.

Thus, there is a need for a process for accurately comparing, calculating and displaying the difference between the costs associated with the operation of a CSD and a VSD in a refrigeration system while the refrigeration system is using only a VSD, or alternately, while the refrigeration system is using only a CSD.

SUMMARY OF THE INVENTION

The present invention relates to a method for comparing costs associated with operating a refrigeration system using a first drive type versus a second drive type while the refrigeration system is operating with the first drive type. The steps include providing an equation correlating operating performance of a refrigeration system using a first drive type versus a refrigeration system using a second drive type; inputting values associated with operation of the refrigeration system; measuring a parameter associated with the equation; determining an amount of energy required by the first drive type to operate the refrigeration system for a predetermined time; calculating a ratio based on the amount of energy required by the first drive type divided by a predetermined amount of energy required for the first drive type; calculating a cost associated with operation of the refrigeration system using the first drive type; calculating a cost associated with operation of the refrigeration system using the second drive type using the equation; and comparing the cost associated with operating the refrigeration system using the first drive type with the cost associated with operating the refrigeration system using the second drive type.

The present invention further relates to a refrigeration system including a refrigeration circuit having a compressor driven by a motor, a condenser and an evaporator connected in a closed loop. A first drive type drives the compressor motor. A computer system, the computer system includes a microprocessor and a memory device, the memory device storing an equation to calculate operating cost of the refrigeration circuit using a second drive type. The equation incorporates at least one measured operating parameter of the refrigeration circuit. At least one sensor measures the at least one operating parameter of the refrigeration circuit. The computer system is configured to determine an amount of energy required by the first drive type using the refrigeration circuit for a predetermined time. A first ratio, the first ratio is based on the amount of energy required by the first drive type divided by a predetermined amount of energy required by the first drive type. A second ratio, the second ratio is obtained by the computer system to solve the equation using the first ratio and the at least one operating parameter. The second ratio is based on the amount of energy required by the second drive type divided by a predetermined amount of energy required by the second drive type.

The present invention relates to a refrigeration system including a refrigeration circuit having a compressor driven by a motor, a condenser and an evaporator connected in a closed loop. A first drive type drives the compressor motor. At least one sensor measures at least one operating parameter of the refrigeration circuit. A computer system includes a microprocessor and a memory device and at least one computer program, the at least one computer program being configured to calculate operating costs of the refrigeration circuit using the first drive type and a second drive type. An amount of energy is used by the first drive type in the refrigeration circuit for a predetermined time. A first ratio is based on the amount of energy used by the first drive type divided by a predetermined amount of energy required by the first drive type. A second ratio is based on the amount of energy required by the second drive type divided by a predetermined amount of energy required by the second drive type. The second ratio is determined from an equation having the first ratio and the at least one operating parameter as inputs to the equation.

Among the principal advantages of the present invention is the ability to compare energy savings between operating a refrigeration system with a VSD as opposed to a CSD without the need for a CSD operated refrigeration system.

Another advantage of the present invention is the ability to compare unrealized energy savings between operating a refrigeration system with a CSD as opposed to a VSD without the need for a VSD operated refrigeration system.

A further advantage of the present invention is the ability to compare energy savings between operating a refrigeration system with a VSD as opposed to a CSD without having to manipulate a family of performance curves associated the CSD.

A yet further advantage of the present invention is the ability to compare unrealized energy savings between operating a refrigeration system with a CSD as opposed to a VSD without having to manipulate a family of performance curves associated with the VSD.

Other features and advantages of the present invention will be apparent from the following more detailed description of the preferred embodiment, taken in conjunction with the accompanying drawings which illustrate, by way of example, the principles of the invention.

BRIEF DESCRIPTION OF THE DRAWINGS

Figure. 1 is a schematic view of a refrigerant system for use with the present invention.

Figure 2 shows a set of actual performance curves for multiple capacity refrigeration systems using R134a refrigerant, using a CSD and having an entering condenser water temperature of 65°F.

Figure 3 shows a set of actual performance curves for the multiple capacity refrigeration systems using R134a refrigerant, using a VSD and having an entering condenser water temperature of 65°F.

Figure 4 shows a set of curve-fitted performance curves for the refrigeration system using R134a refrigerant, using the CSD and having an entering condenser water temperatures of 45-95°F.

Figure 5 shows a set of curve-fitted performance curves for the refrigeration system using R134a refrigerant, using the VSD and having an entering condenser water temperatures of 45-95°F.

Figure 6 shows the curve-fitted performance curve for the refrigeration system using the CSD being overlaid by the refrigeration system using the VSD, using R134a refrigerant and having an entering condenser water temperature of 65°F.

Figure 7 shows a set of actual performance curves for multiple capacity refrigeration systems using R123 refrigerant, using a CSD and having an entering condenser water temperature of 65°F.

Figure 8 shows a set of actual performance curves for the multiple capacity refrigeration systems using R123 refrigerant, using a VSD and having an entering condenser water temperature of 65°F.

Figure 9 shows a set of curve-fitted performance curves for the refrigeration system using R123 refrigerant, using the CSD and having entering condenser water temperatures of 45-95°F.

Figure 10 shows a set of curve-fitted performance curves for the refrigeration system using R123 refrigerant, using the VSD and having entering condenser water temperatures of 45-95°F.

Figure 11 shows the curve-fitted performance curve for the refrigeration system using the CSD being overlaid by the refrigeration system using the VSD, using R123 refrigerant and having an entering condenser water temperature of 65°F.

Figure 12 shows a flow chart for comparing costs of the refrigeration system using the CSD versus the VSD for a process of the present invention.

Figure 13 is a schematic view of an alternate embodiment of a refrigerant system for use with the present invention.

Wherever possible, the same reference numbers will be used throughout the drawings to refer to the same or like parts.

DETAILED DESCRIPTION OF THE INVENTION

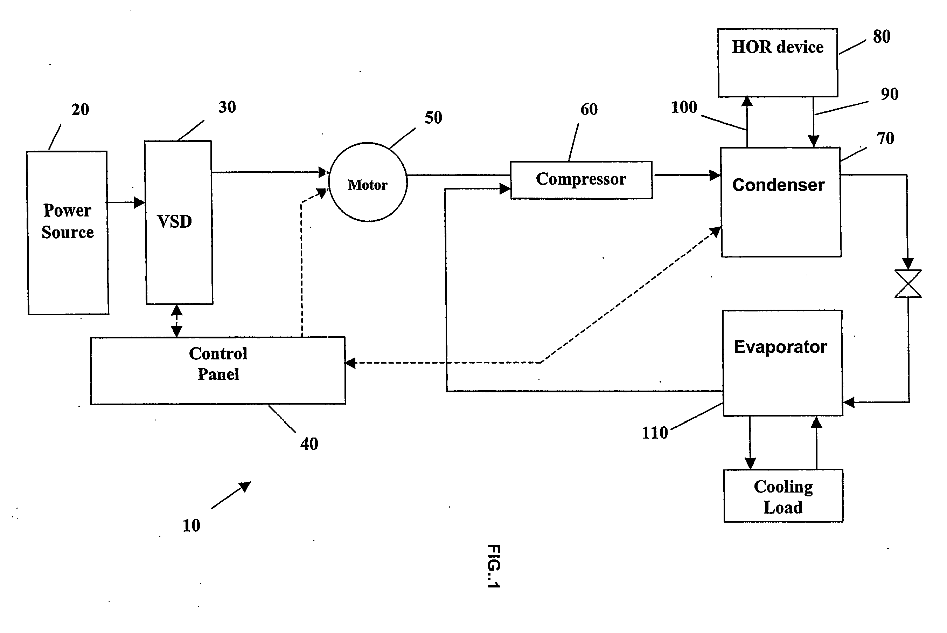

Figure 1 illustrates generally an application of the present invention. An AC power source 20 supplies a variable speed drive (VSD) 30, which powers a motor 50. In another embodiment, the VSD 30 can power more than one motor 50 or each of multiple VSDs 30 or VSD sections may be used to power corresponding motors 50. The motor 50 is preferably used to drive a corresponding compressor 60 of a refrigeration or chiller system 10.

The AC power source 20 provides single phase or multi-phase (e.g., three phase), fixed voltage, and fixed frequency AC power to the VSD 30 from an AC power grid or distribution system that is present at a site. The AC power source 20 preferably can supply an AC voltage or line voltage of 200 V, 230 V, 380 V, 460 V, or 600 V at a line frequency of 50 Hz or 60 Hz to the VSD 30, depending on the corresponding AC power grid.

The VSD 30 receives AC power having a particular fixed line voltage and fixed line frequency from the AC power source 20 and provides AC power to the motor 50 at desired voltages and desired frequencies, both of which can be varied proportionally to satisfy particular requirements. Preferably, the VSD 30 can provide AC power to the motor 50 that may have higher voltages and frequencies and lower voltages and frequencies than the rated voltage and frequency of the motor 50. In another embodiment, the VSD 30 may again provide higher and lower frequencies but only the same or lower voltages than the rated voltage and frequency of the motor 50.

A microprocessor, controller or control panel 40 is used to control the VSD 30, motor 50 and preferably the control panel 40 includes a display and keypad, and can be used to analyze and compare the costs associated with operating the refrigeration system using the VSD 30 as opposed to using a CSD (not shown). Specifically, such cost comparison of the VSD 30 and the CSD, without the presence of the CSD, will be discussed in further detail below.

The control panel 40 executes a control system that uses control algorithm(s) or software to control operation of the refrigeration system 10 and to determine and implement an operating configuration to control the capacity of the compressor 60 in response to a particular output capacity requirement for the refrigeration system 10. In one embodiment, the control algorithm(s) can be computer programs or software stored in the non-volatile memory of the control panel 40 and can include a series of instructions executable by the microprocessor of the control panel 40. While it is preferred that the control algorithm be embodied in a computer program(s) and executed by the microprocessor, it is to be understood that the control algorithm may be implemented and executed using digital and/or analog hardware by those skilled in the art.

The motor 50 is preferably an induction motor that is capable of being operated at variable speeds. The induction motor can have any suitable pole arrangement including two poles, four poles or six poles. However, any suitable motor that can be operated at variable speeds can be used with the present invention.

Preferably, the control panel, microprocessor or controller 40 can provide control signals to the VSD 30 to control the operation of the VSD 30, and particularly the operation of the motor 50 to provide the optimal operational setting for the VSD 30 and motor 50 depending on the particular sensor readings received by the control panel 40. For example, in the refrigeration system 10, the control panel 40 can adjust the output voltage and frequency provided by the VSD 30 to correspond to changing conditions in the refrigeration system 10, i.e., the control panel 40 can increase or decrease the output voltage and frequency provided by the VSD 30 in response to increasing or decreasing load/head conditions on the compressor 60 in order to obtain a desired operating speed of the motor 50 and a desired capacity of the compressor 60. A conventional HVAC, refrigeration or liquid chiller system 10 includes many other features that are not shown in Figure 1. These features have been purposely omitted to simplify the drawing for ease of illustration.

The refrigeration system 10 further includes a condenser arrangement 70, a heat of rejection (HOR) device 80, such as a reservoir, having a supply line 90 that supplies water to the condenser 70 and a return line 100 that returns water to the HOR device 80, expansion devices, a water chiller or evaporator arrangement 110. The control panel 40 can include an analog to digital (A/D) converter, a microprocessor, a non-volatile memory, and an interface board to control operation of the refrigeration system 10. The control panel 40 can also be used to control the operation of the VSD 30, the motor 50 and the compressor 60. The compressor 60 compresses a refrigerant vapor and delivers it to the condenser 70.

The compressor 60 is preferably a screw compressor or a centrifugal compressor, however the compressor can be any suitable type of compressor including a reciprocating compressor, scroll compressor, rotary compressor or other type of compressor. The coefficients of best fit curves are compressor type and refrigerant dependent, although the relationship remains the same (see equations [1] and [2] below). The output capacity of the compressors 60 can be based on the operating speed of the compressor 60, which operating speed is dependent on the output speed of the motor 50 driven by the VSD 30. The refrigerant vapor delivered to the condenser 70 enters into a heat exchange relationship with a fluid, such as water, although it may be possible to use air, and undergoes a phase change to a refrigerant liquid as a result of the heat exchange relationship with the liquid. The condensed liquid refrigerant from condenser 70 flows through corresponding expansion devices to the evaporator 110.

The evaporator 110 can include connections for a supply line and a return line of a cooling load. A secondary liquid, which is preferably water, but can be any other suitable secondary liquid, e.g., ethylene glycol, propylene glycol, calcium chloride brine or sodium chloride brine, travels into the evaporator 110 via a return line and exits the evaporator 110 via a supply line. The liquid refrigerant in the evaporator 110 enters into a heat exchange relationship with the secondary liquid to chill the temperature of the secondary liquid. The refrigerant liquid in the evaporator 110 undergoes a phase change to a refrigerant vapor as a result of the heat exchange relationship with the secondary liquid. The vapor refrigerant in the evaporator 110 then returns to the compressor 60 to complete the cycle. It is to be understood that any suitable configuration of condenser 70 and evaporator 110 can be used in the system 10, provided that the appropriate phase change of the refrigerant in the condenser 70 and evaporator 110 is obtained.

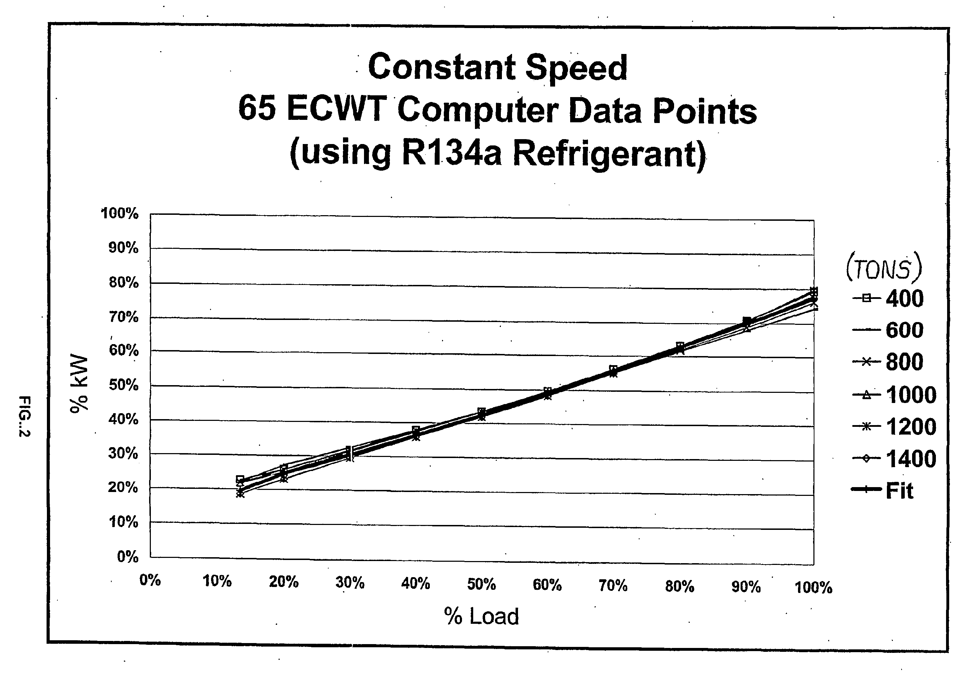

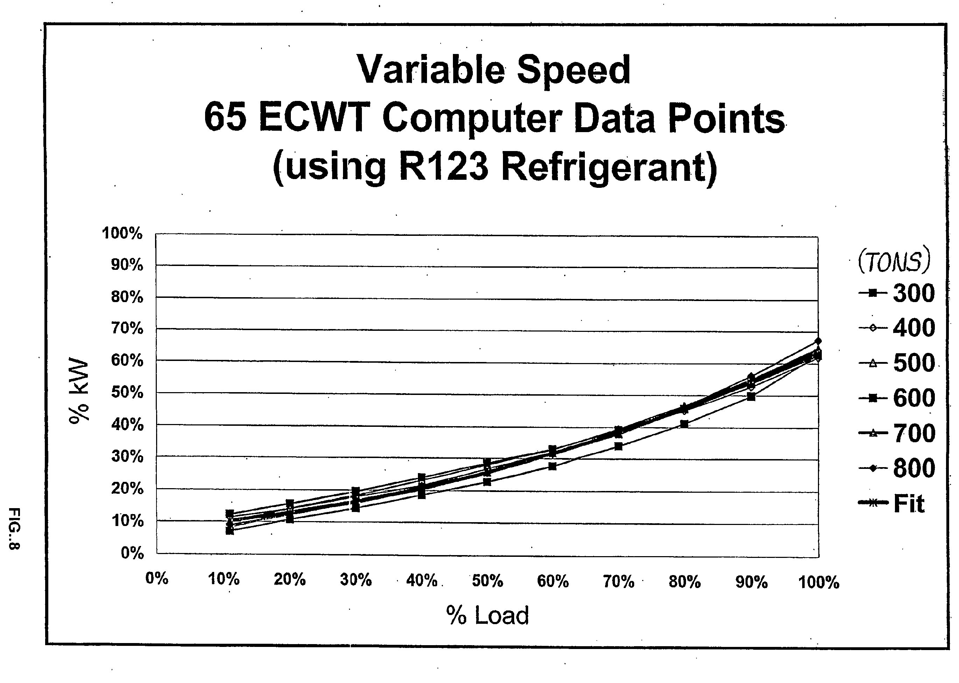

The present invention includes an equation that can correlate operating performance of the refrigeration system 10 with the VSD 30 versus a CSD. The equation of the present invention is derived from Air-Conditioning and Refrigeration Institute (ARI) programs which are certified to accurately correspond to the operating performance of the refrigeration system that it represents. However, the equation of the present invention makes use of a single "best fit" curve generated from multiple curves (as Figs. 2, 3 and 7, 8 illustrate) for operation of a refrigeration system using a VSD, each curve representing a selected constant head. Similarly, a single "best fit" curve is generated from multiple curves for operation of a refrigeration system using a CSD. Each "best fit" curve corresponds to operation of the refrigeration curve with a cooling fluid, such as water, entering the condenser 70 from the supply line 90 at a given temperature. Once the refrigeration system is operated using the VSD 30, the load percentage (% load) can be determined. The % load is a ratio of the amount of cooling provided by the refrigeration system divided by the design capacity of the refrigeration system. For example, if the refrigeration system has a design capacity of 400 tons of cooling and is operating to provide 200 tons, the % load is 50%. Since the % load for corresponding CSD and VSD curves is identical at the time of comparison, the curves can be overlaid. By correlating the overlaid best fit curves, which define a nomogram, having a common x-axis intercept value (% load), the y-axis intercepts (% kW) can be compared, as can the operating costs.

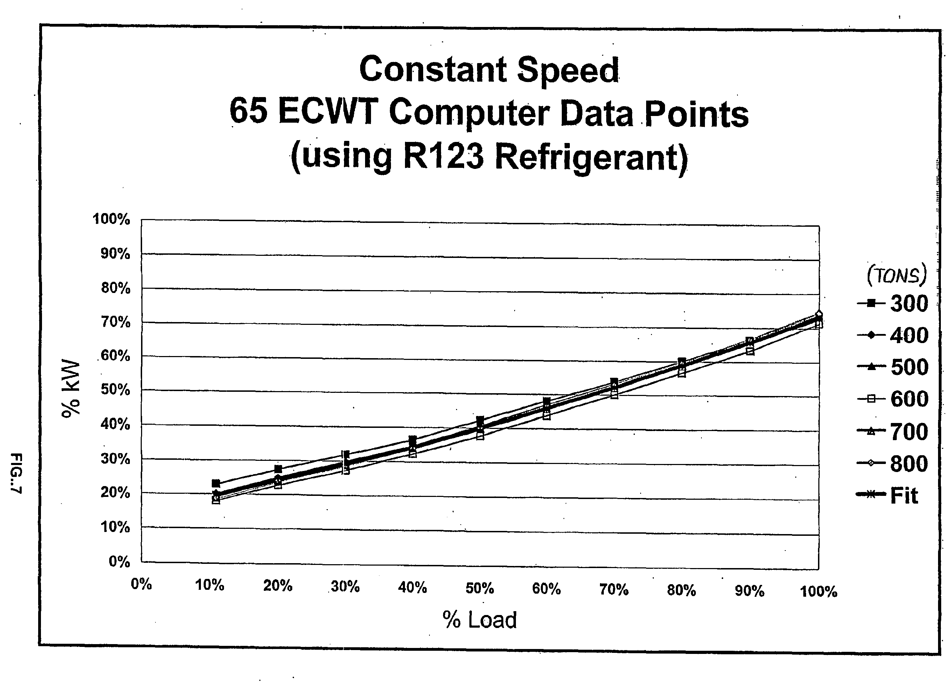

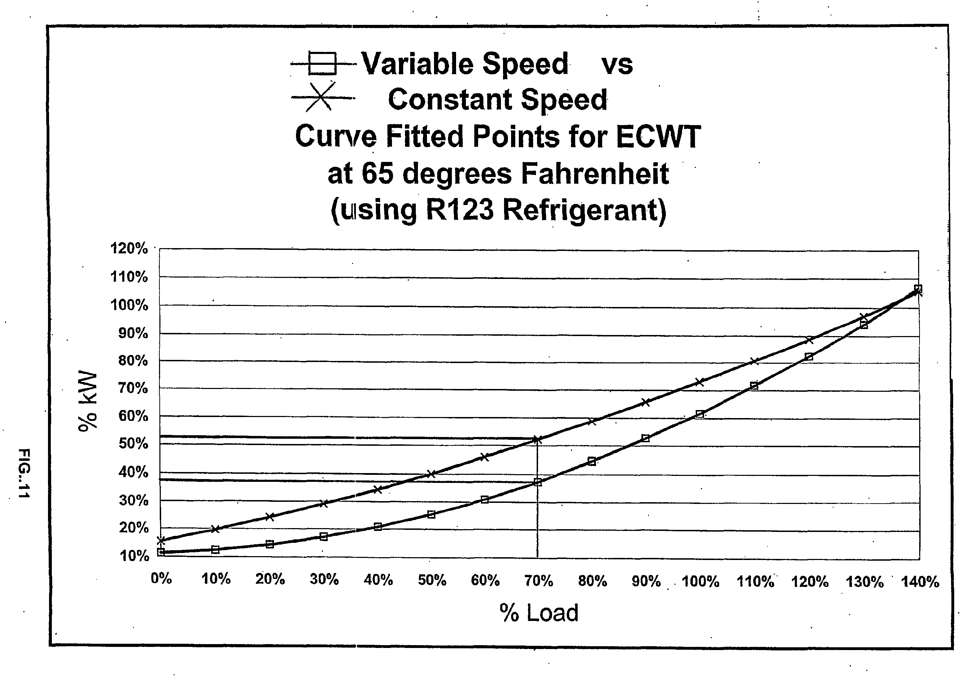

Two equations of the present invention have been derived, one from a refrigeration system using R134a refrigerant (Figures 2-6), and the other from a refrigeration system using R123 refrigerant (Figures 7-11). Since each equation is derived in the same way, only Figures 2-6 will be discussed in detail. Each derived equation is a nine term polynomial expression including the same combinations of two parameters that are discussed in further detail below.

Figure 2 shows performance curves for a refrigeration system using a CSD, using R134a refrigerant, and having an entering condenser water temperature ("ECWT") of 65°F (see supply line 90 in Figure 1). Each curve corresponds to a refrigeration system having a different cooling capacity, expressed in tons, a ton being equal to 12,000 BTUs. There are six different cooling capacity curves, corresponding to 400-1,400 tons in 200 ton increments. A seventh curve is a best fit curve, which was calculated from a curve-fitting program that most closely corresponded to the six cooling capacity curves.

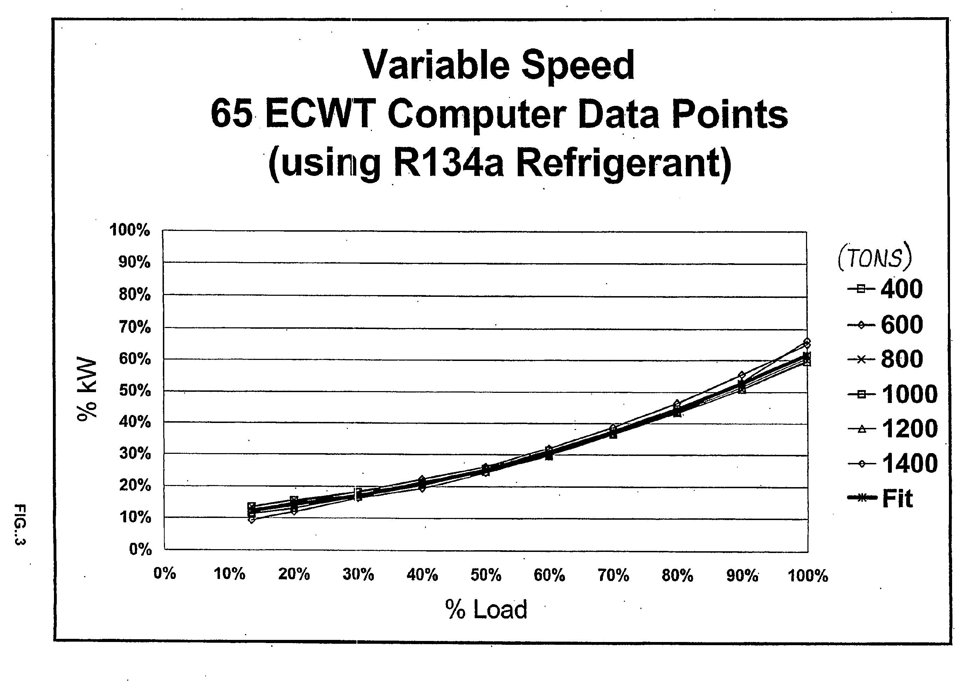

Figure 3 measured the same data as was measured in Figure 2, except Figure 3 corresponds to performance curves for the refrigeration system using a VSD. However, head can also be measured as a function of leaving condenser water temperature ("LCWT"), saturated condensing temperature, refrigerant pressure or temperature differential between the evaporator and condenser as are well known in the art. These different measurements can be incorporated into the equation by changing the coefficients of the relationship (see equations [1] and [2] below).

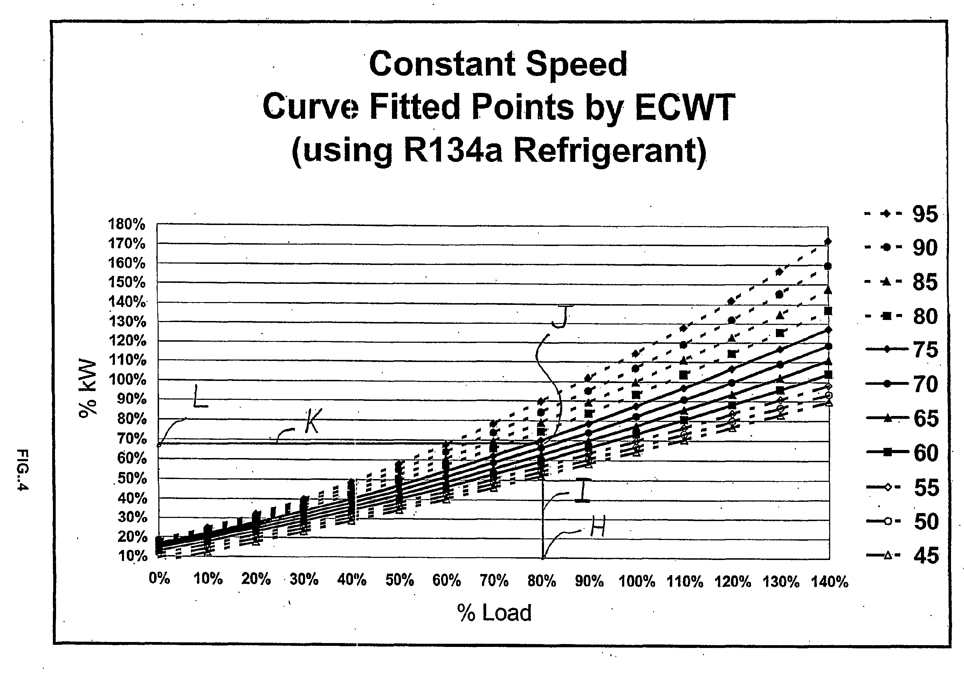

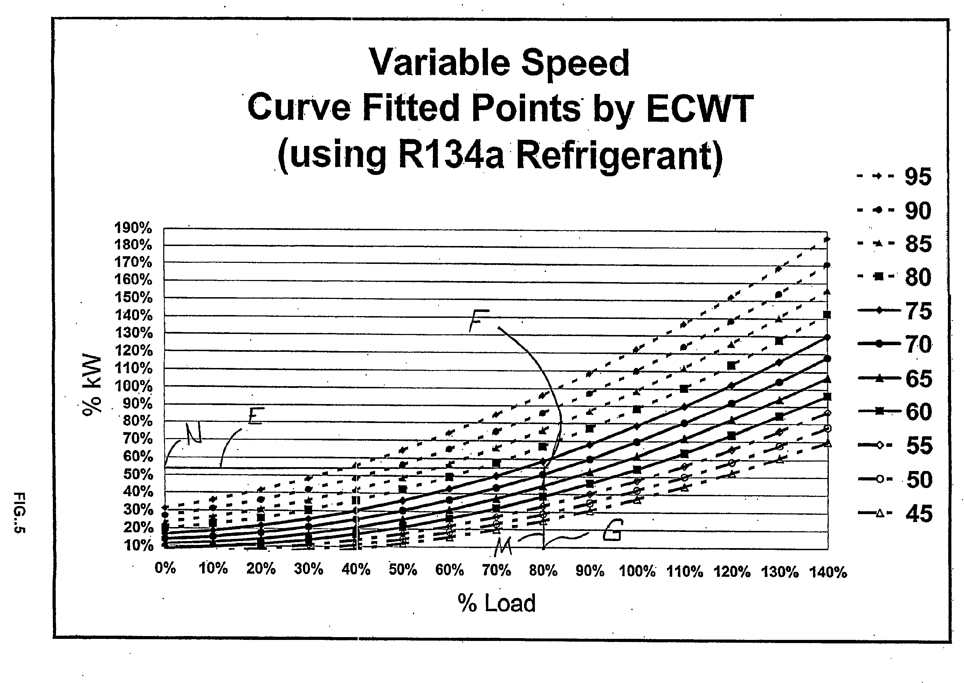

A similar set of performance curves was generated for each ECWT increment of 5°F for a range of 45°F-95°F. Figure 4 shows the performance curves for the refrigeration system using the CSD at different ECWTs ranging from 45-95°F in 5 degree increments. Similarly, Figure 5 shows the performance curves for the refrigeration system using the VSD at different ECWTs ranging from 45-95°F in 5 degree increments.

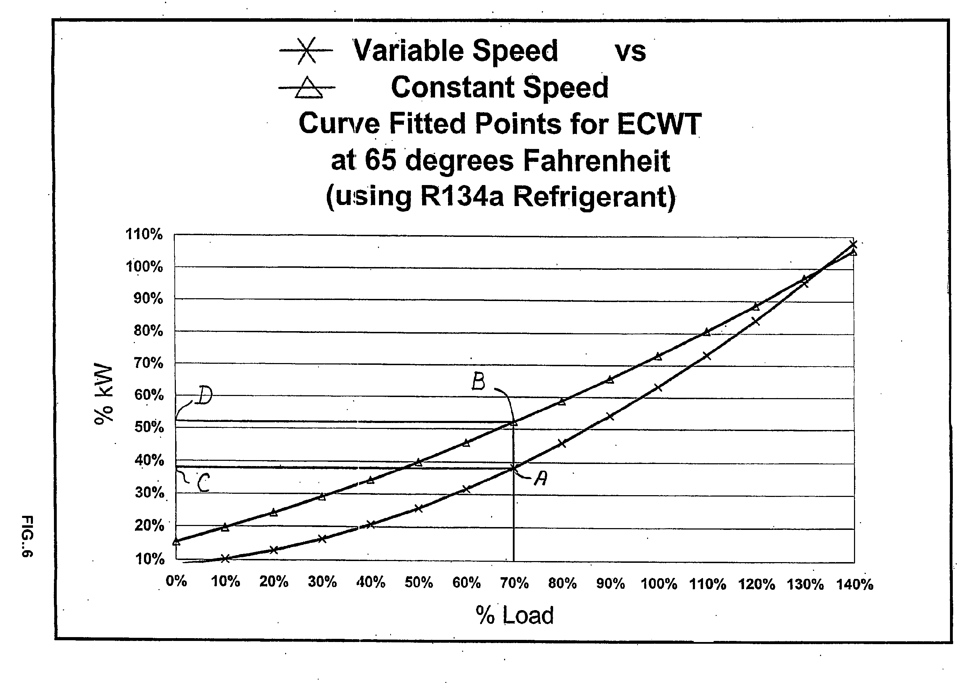

Figure 6 contains both the performance curves for the refrigeration system using the CSD and the VSD for ECWT of 65°F. Although the curves are different from each other, the curves share a common cooling load at a particular time to which they are applied. For example, if the refrigeration system is a 500 ton unit, and the particular cooling load is 350 tons, the % load is 70%. A vertical x-intercept line can be drawn from the 70% load to intersect each of the curves, point A for the VSD curve, and point B for the CSD curve. Similarly, a horizontal line can then be drawn from the point A of the VSD curve to define a y-intercept point C, and a horizontal line can then be drawn from the point B of the CSD curve to define a y-intercept point D. Each of the points C and D correspond to a %kW reading, which is a percentage of the energy expended as compared to the energy expended at 100% load, or the design load. The amount of energy expended at the design load is the design kW. Since the design load is based on a rated motor speed and a voltage provided to the motor, if the motor speed exceeds the rated motor speed, both the % load and the % kW can exceed 100%, or the design load and the design kW, as is shown by a portion of the curves in the upper right hand portion in Figure 6.

To calculate energy costs, each of the %kW readings for the respective speed drive is multiplied by its respective design kW to obtain a kW value. Each of the calculated kW values is then subtracted from each other to obtain a difference kW which is the difference between points C and D on the % load (y-axis) after being multiplied by the respective design kW. However, energy consumption is typically expressed in kW-hrs. Therefore, once the difference kW is calculated, the difference is then multiplied by the amount of time that the difference kW occurred, and then further multiplied by the rate that is charged for energy, such as $0.06 per kW-hr.

As previously stated, Figures 2-6 and Figures 7-11 correspond to refrigeration system performance curves, and are formulated the same way, although the refrigeration system in Figures 7-11 uses a different refrigerant, R123 (or R11), versus R134a (or R22) in Figures 2-6, and the cooling capacities in the R123 refrigerant system was from 300-800 tons, versus 400-1,400 tons in the R134a refrigerant system.

By combining the curve-fitted points to obtain a single curve for each 5°F increment of ECWT, such as in Figure 2, exact values are no longer obtained. That is, the fit curve of Figure 2 does not exactly match the curves for any of the head-capacity curves in Figure 2. However, since the curves substantially overlay each other, the best fit approximations are quite close, the values being typically within about 5 percent of any selected head-capacity. The best fit approximation removes the requirement for a significant amount of data that would otherwise need to be retained to perform these calculations. While this best fit approximation is a greatly simplified approach, it still requires maintaining performance curves for each 5°F increment of ECWT for both the CSDs and the VSDs, and performing numerous calculations to determine the % kW ratios, as discussed in Figure 6.

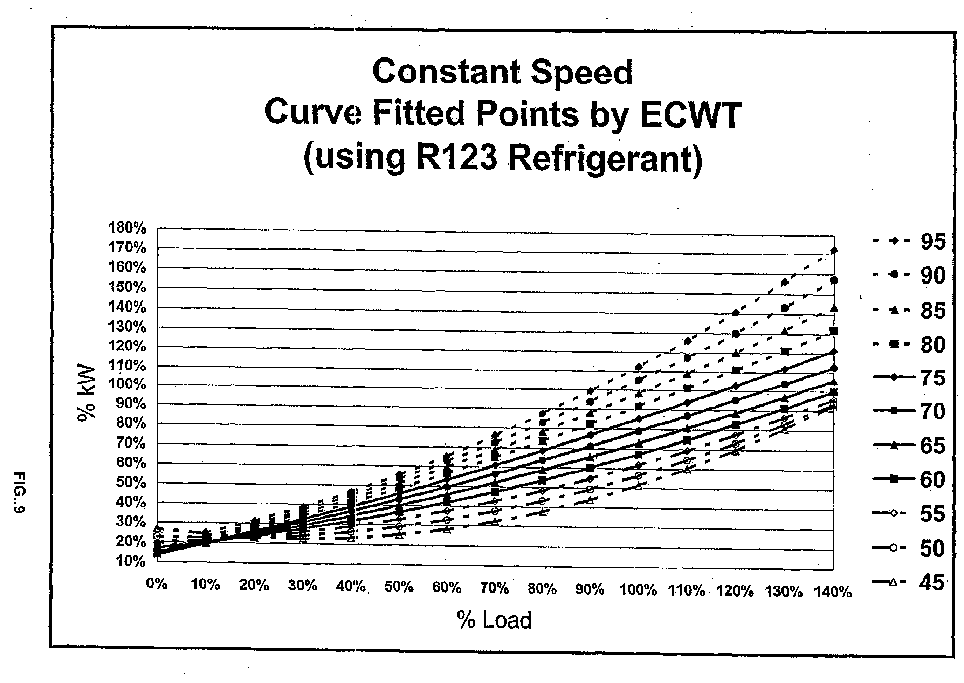

To avoid the curve manipulation and associated calculations, an equation was derived for each of the two refrigeration systems in respective Figures 4 and 9 using the best fit curve data for each of the 5°F increments of ECWT to obtain a ratio of the CSD input to the CSD design kW, identified as "D". The equations, although having different coefficients, each define a 9 term polynomial expression based on various combinations of two terms. The first term "X", is the ratio of VSD input kW to VSD design kW, ranging in value from 0.00 to 1.00. The second term "Y", is the ECWT, measured in degrees Fahrenheit (°F). Equation [1] is derived from data extracted from the curves in Figure 4, and equation [2] is derived from data extracted from the curves in Figure 9.

$$D = (\ 2.348e\text{-}2) \qquad\qquad [1]$$

$$
\begin{aligned}
&+ (\ 4.277 \quad ) \times X \\
&+ (\text{-}8.209 \quad ) \times X^2 \\
&+ (\ 4.105e\text{-}3) \times Y \\
&+ (\text{-}4.735e\text{-}2) \times X \times Y \\
&+ (\ 1.641e\text{-}1) \times X^2 \times Y \\
&+ (\text{-}6.694e\text{-}5) \times Y^2 \\
&+ (\ 1.621e\text{-}4) \times X \times Y^2 \\
&+ (\text{-}8.363e\text{-}4) \times X^2 \times Y^2
\end{aligned}
$$

$$D = (\ 2.188\ )$$
$$+ (-1.186e{+}1) \times X$$
$$+ (\ 1.331e{+}1) \times X^2$$
$$+ (-5.139e{-}2) \times Y$$
$$+ (\ 3.526e{-}1) \times X \times Y$$
$$+ (-3.714e{-}1) \times X^2 \times Y$$
$$+ (\ 2.957e{-}4) \times Y^2$$
$$+ (-2.338e{-}3) \times X \times Y^2$$
$$+ (\ 2.504e{-}3) \times X^2 \times Y^2$$

[2]

These equations permit the comparison of energy costs of the refrigeration system using the CSD with the measured energy costs of the refrigeration using the VSD without requiring the performance curves for the refrigeration system for either of the drives.

To calculate a cost savings for the refrigeration system 10 using the VSD 30 versus using the CSD by applying the equation, both the VSD design kW and the CSD design kW must be provided, as must the cost per kW-hr and the ECWT. In an example, for an 800 ton refrigeration system using R134a refrigerant, the design kW for the VSD was 530 kW and the design kW for the CSD was 508kW, and the input VSD was 285kW. The ECWT was 72°F. Therefore the "X" term (input variable speed kW/VSD design kW) was 285kW divided by 530kW, or about 0.54. The "Y" term is 72. Substituting these values into equation [1] yields a value for "D" of about 0.68, which is the ratio of CSD input kW ("Z") divided by the CSD design kW (D = 0.68 = Z/508). This yields a value for the CSD input kW of 345kW.

To double-check the results from the equation against the graphical data, refer to Figure 5, which is the variable speed curve using R134a refrigerant. Line "E" is the y-intercept extending from 0.54 (54%) horizontally to point "F". Point "F" is an interpolation between the 70°F and 75°F ECWT curves, since the ECWT was 72°F. Tracing a vertical line from point "F" to the x-intercept, point "G", yields approximately an 80% load. Refer now to Figure 4, which is the constant speed curve using R134a. Starting with the 80% load, point "H", a vertical line "I" is traced to point "J", which is also an interpolation between the 70°F and 75°F ECWT curves, since the ECWT was 72°F. Tracing a line "K" from point "J" to y-intercept, point "L", is 0.68, which matches the ratio calculated for D above. Therefore, this example confirms that equation [1] defines the relationship between the performance of the CSD and the VSD for the refrigeration system.

To then calculate the actual costs savings, assuming, for convenience, the values were maintained for one hour, with an energy cost of $0.06 per kW-hr, the difference in kW between the refrigeration system using the VSD and the CSD is 60kW (345-285kW). The savings for one hour under these conditions is then $3.60 ($0.06 x 60).

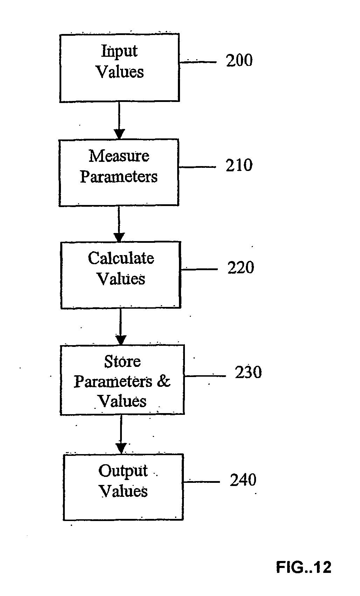

Figure 12 illustrates a flow chart detailing the control process of the present invention relating to cost comparison in a refrigeration system 10 as shown in Figure 1. The process begins in step 200 with inputting values into the control panel 40, such as the price per kW-hr, the variable speed design kW and the constant speed design kW. The variable speed design kW and the constant speed design kW are values set by the manufacturers at the time of commission of the refrigeration system, and are intended to be input by the installers. The price per kW-hr can be updated as required. Preferably, this information can be input into a keypad provided with the control panel 40. For control panel 40 configurations lacking a keypad and screen, a separate device having these features can be installed. The display screen of the control panel 40 is typically set to either "Total Energy Saved" or "Total Savings," both in United States Dollars.

Once the values have been input into the control panel 40 in step 200, and the refrigeration system is enabled, in step 210 the control panel 40 measures parameters, such as the ECWT or other values relating to operating performance. Preferably, the ECWT, in degrees Fahrenheit, is obtained from an analog input channel using a sensing device, such as a thermistor. This information, and other information may be provided directly to the control panel 40. Additionally, in step 210, the input VSD kW data from the VSD, or an optional harmonic filter or other device is provided to the control panel 40 at predetermined time periods, such as every two seconds, since the input VSD kW data is subject to change in response to the cooling load as determined by the control panel 40.

After parameters have been measured, values are calculated in step 220 and stored in step 230. The stored values include not only the calculated values in step 220, but may also include measured parameters in step 210. A number of the values calculated in step 220 which are included below, are summarized by subject matter, and include a discussion of measuring, calculating and storing steps.

Hourly Average Return Condenser Liquid Temperature (x24 hours)

The Return Condenser Liquid Temperature is preferably read every second, and added to a sum. After 3600 seconds, the sum is divided by 3600 to obtain the average for the past hour, then the sum is cleared. The averages for the past 24 hours are preferably scrolled using a first in first out ("FIFO") scheme, with the most recently calculated average being preferably stored in a first array position. These values are preferably stored in erasable random access memory ("RAM"), such as battery-backed RAM or BRAM, including a running sum, a data index point, and a Julian time of the last data point.

Daily Average Return Condenser Liquid Temperature (x30 days)

The Hourly Average Return Condenser Liquid Temperature is preferably read every hour, and added to a sum. After 24 hours, the sum is preferably divided by 24 to obtain the average for the previous day, then the sum is cleared. The averages for the past 30 days are preferably scrolled using a FIFO scheme, and the latest computed average is preferably stored in a first array position. These values are preferably stored in memory including the running sum, the data index point, and the Julian time of the last data point.

Monthly Average Return Condenser Liquid Temperature (x12 months)

The Daily Average Return Condenser Liquid Temperature is preferably read every day, and added to a sum. After 30 days, the sum is preferably divided by 30 to obtain the average for the past month, then the sum is preferably cleared. The averages for the past 12 months are preferably scrolled using a FIFO scheme, and the latest average computed is preferably stored in the first array position. These values are preferably stored in memory including the running sum, the data index point, and the Julian time of the last data point.

Yearly Average Return Condenser Liquid Temperature (x20 years)

The Monthly Average Return Condenser Liquid Temperature is preferably read every month, and added to a sum. After 12 months, the sum is preferably divided by 12 to obtain the average for the past year, then the sum is preferably cleared. The averages for the past 20 years are preferably scrolled using a FIFO scheme, and the latest computed average is preferably stored in the first array position. These values are preferably stored in memory including the running sum, the data index point, and the Julian time of the last data point.

Hourly Minimum Return Condenser Liquid Temperature (x24 hours)

The Return Condenser Liquid Temperature is preferably read every second, and compared to the last minimum value. If it is less than the last minimum value, the last minimum value is preferably set to the current temperature reading. The minimums for the past 24 hours are preferably scrolled using a FIFO scheme, and the latest minimum evaluated is preferably stored in the first array position. These values are preferably stored in memory, including the Julian time of the last data point.

Daily Minimum Return Condenser Liquid Temperature (x30 days)

When the calendar day changes, the last 24 Hourly Minimum Return Condenser Liquid Temperatures is examined for the minimum value for that day. The minimums for the past 30 days is preferably scrolled using a FIFO scheme, and the latest minimum evaluated is preferably stored in the first array position. These values are preferably stored in memory, including the Julian time of the last data point.

Monthly Minimum Return Condenser Liquid Temperature (x12 months)

When the calendar month changes, the last 30 Daily Minimum Return Condenser Liquid Temperatures are examined for the minimum value for that month. The minimums for the past 12 months are preferably scrolled using a FIFO scheme, and the latest minimum evaluated is preferably stored in the first array position. These values are preferably stored in memory, including the Julian time of the last data point.

Yearly Minimum Return Condenser Liquid Temperature (x20 years)

When the calendar year changes, the last 12 Monthly Minimum Return Condenser Liquid Temperatures are examined for the minimum value for that year. The minimums for the past 20 years are preferably scrolled using a FIFO scheme, and the latest minimum evaluated are preferably stored in the first array position. These values are preferably stored in memory, including the Julian time of the last data point.

VSD kW-hr Meter

This calculation can be performed as follows: the VSD kW is transmitted from the VSD to the control panel once every two seconds. This value is added to the VSD kW Total. When this sum exceeds 1800 (3600 seconds per hour / 2 seconds per reading), since 1800 kW equals 1 kW-hr for this data collection rate, the VSD kW-hr Meter is incremented by one, and 1800 is subtracted from the VSD kW Total that corresponds to a partial kW-hr, which re-sets the partial kW-hr component of the VSD kW-hr Meter. The value of the VSD kW-hr Meter can be modified if the access level is properly set. Both the VSD kW-hr Meter and the VSD kW Total are preferably stored in memory.

CSD kW-hr Meter

Every two seconds, while the chiller is running, the VSD kW is divided by the VSD design kW to get VSD % design kW. Using the ECWT and the equation, the CSD % design kW is determined. This is preferably multiplied by the CSD design kW to obtain the CSD kW. The CSD kW value is preferably added to the CSD kW Total. When this sum exceeds 1800 (3600 seconds per hour / 2 seconds per reading), since 1800 kW equals 1 kW-hr for this data collection rate, the CSD kW-hr Meter is preferably incremented by one, and 1800 is preferably subtracted from the CSD kW Total that corresponds to a partial kW-hr, which re-sets the partial kW-hr component of the CSD kW-hr Meter. The value of the CSD kW-hr meter can be modified if the access level is properly set. Both the CSD kW-hr Meter and the CSD kW Total are preferably stored in memory.

Total Saved Energy

Every two seconds, while the chiller is running, using the transmitted VSD kW and the calculated CSD kW, the energy saved is preferably calculated by subtracting the VSD kW from the CSD kW. This value is then added to the Saved kW Total. When this sum exceeds 1800 (3600 seconds per hour / 2 seconds per reading), since 1800 kW equals 1 kW-hr for this data collection rate, the Total Saved Energy (kW-hr) is preferably incremented by one, and 1800 is preferably subtracted from the Saved kW Total that corresponds to a partial kW-hr, which re-sets the partial kW-hr component of the VSD kW-hr Meter. The value of the Total Saved Energy can be modified if the access level is properly set. Both the Total Saved Energy and the Saved kW Total are preferably stored in memory.

Hourly Total Saved Energy (x24 hours)

The Total Saved Energy is preferably read every hour. The reading taken one hour ago is subtracted from the most recent reading to determine the present hourly value. The hourly values for the past 24 hours is preferably scrolled using a FIFO scheme, and the latest hourly value most recently computed are preferably stored in the first array position. These values are preferably stored in memory, including the running sum, the data index point, and the Julian time of the last data point.

Daily Total Saved Energy (x30 days)

The Total Saved Energy is preferably read at midnight of every day. The reading taken one day ago is subtracted from the most recent reading just taken to determine the present daily value. The daily values for the past 30 days are preferably scrolled using a FIFO scheme, and the latest daily value computed is preferably stored in the first array position. These values are preferably stored in memory including the running sum, the data index point, and the Julian time of the last data point.

Monthly Total Saved Energy (x12 months)

The Total Saved Energy is preferably read at midnight of the last day of every month. The reading taken one month ago is subtracted from the most recent reading to determine the present monthly value. The monthly values for the past 12 months are preferably scrolled using a FIFO scheme, and the latest monthly value computed is preferably stored in the first array position. These values are preferably stored in memory including the running sum, the data index point, and the Julian time of the last data point. The actual meter reading at the end of each month is also be stored.

Yearly Total Saved Energy (x20 years)

The Total Saved Energy is preferably read at midnight of the last day of every year. The reading taken one year ago is preferably subtracted from the most recent reading to determine the present yearly value. The yearly values for the past 20 years are preferably scrolled using a FIFO scheme, and the latest yearly value most recently computed is preferably stored in the first array position. These values are preferably stored in memory including the running sum, the data index point, and the Julian time of the last data point.

Total Savings In United States Dollars

The Total Saved Energy is preferably multiplied by the Cost Per kW-hr to compute the Total Savings in United States Dollars.

After the values and parameters have been stored in step 230, values, such as those previously identified above, and preferably those relating to savings, can be output to a display which is included with the control panel 40.

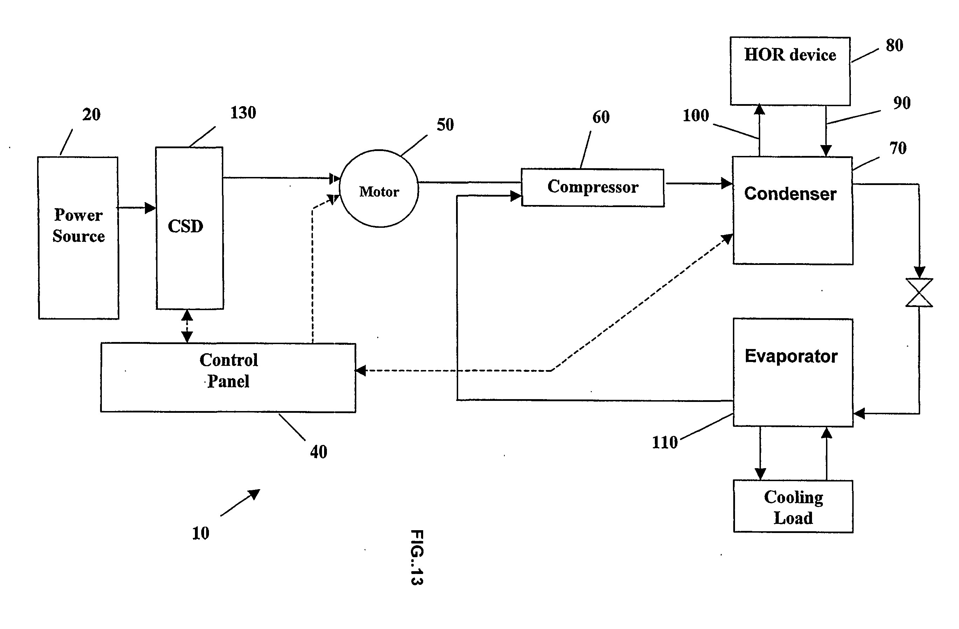

Figure 13 illustrates generally a further application of the present invention.

Figure 13 is otherwise identical to Figure 1, except a CSD 130 is provided in place of VSD 30. In another embodiment, the CSD 130 can power more than one motor 50 or each of multiple CSDs 130 may be used to power corresponding motors 50.

The CSD 130 receives AC power having a particular fixed line voltage and fixed line frequency from the AC power source 20 and provides AC power to the motor 50 at a fixed voltage and frequency to drive the motor 50 at a substantially constant rotational speed.

The present invention includes an equation that can correlate the operating performance of the refrigeration system 10 with the CSD 130 versus a VSD. The equation of the present invention is derived from Air-Conditioning and Refrigeration Institute (ARI) programs, which are certified to accurately correspond to the operating performance of the refrigeration system that it represents. However, the equation of the present invention makes use of a single "best fit" curve generated from multiple curves (as Figs. 2, 3 and 7, 8 illustrate) for operation of a refrigeration system using a CSD, each curve representing a selected constant head. Similarly, a single "best fit" curve is generated from multiple curves for operation of a refrigeration system using a VSD. Each "best fit" curve corresponds to operation of the refrigeration curve with a cooling fluid, such as water, entering the condenser 70 from the supply line 90 at a given temperature. Once the refrigeration system is operated using the CSD 130, the load percentage (% load) can be determined. The % load is a ratio of the amount of cooling provided by the refrigeration system divided by the design capacity of the refrigeration system. For example, if the refrigeration system has a design capacity of 400 tons of cooling and is operating to provide 200 tons, the % load is 50%. Since the % load for corresponding CSD and VSD curves is identical at the time of comparison, the curves can be overlaid. By correlating the overlaid best fit curves, which define a nomogram, having a common x-axis intercept value (% load), the y-axis intercepts (% kW) can be compared, as can the operating costs.

In other words, the previous discussion of the curves of Figures 2-6 (and Figures 7-11) is equally applicable here, since the same CSD and VSD curves are used in the same way. Further, since the same best fit curve data of Figures 4 and 5 is used, the derived equations [1] and [2] which correlate operating performance of the refrigeration system 10 with the VSD 30 versus a CSD (Figure 1), represent a similar 9 term polynomial expression when compared with the derived equations [3] and [4] which correlate operating performance of the refrigeration system 10 with the CSD 130 versus a VSD (Figure 13).

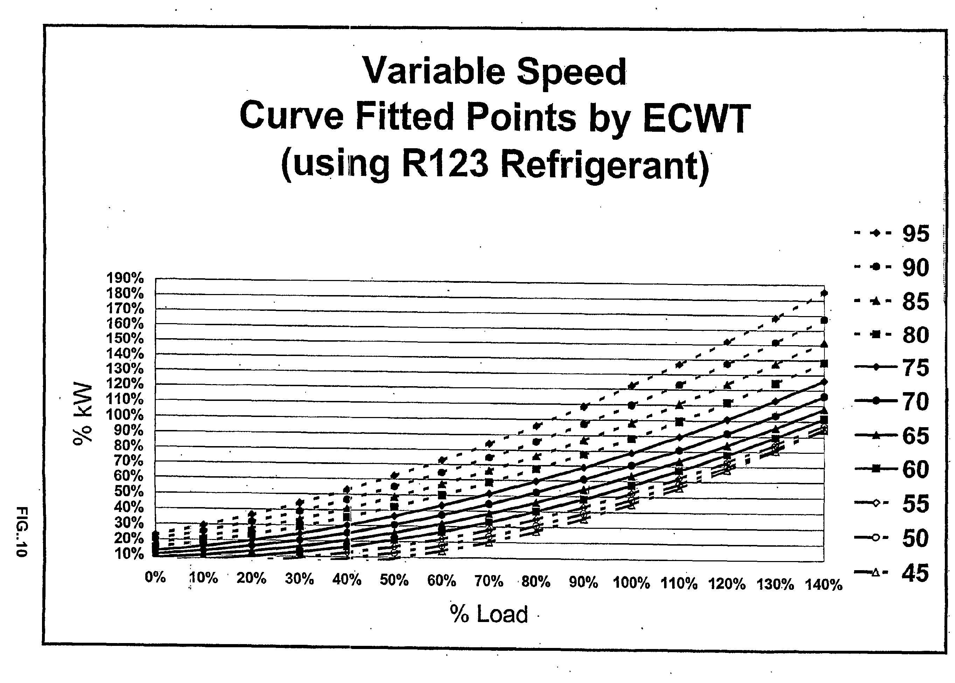

To avoid the curve manipulation and associated calculations, an equation was derived for each of the two refrigeration systems in respective Figures 5 and 10, using the best fit curve data for each of the 5°F increments of ECWT to obtain a ratio of the VSD input to the VSD design kW, identified as "E". The equations, although having different coefficients, each define a 9 term polynomial expression based on various combinations of two terms. The first term "A", is the ratio of CSD input kW to CSD design kW, ranging in value from 0.00 to 1.00. The second term "B", is the ECWT, measured in degrees Fahrenheit (°F). Equation [3] is derived from data extracted from the curves in Figure 5, and equation [4] is derived from data extracted from the curves in Figure 10.

$$E = (9.353e\text{-}1)$$
$$+ (\text{-}2.689 \quad) \times A \quad\quad [3]$$
$$+ (2.825 \quad) \times A^2$$
$$+ (\text{-}2.825e\text{-}2) \times B$$
$$+ (7.027e\text{-}2) \times A \times B$$
$$+ (\text{-}4.832e\text{-}2) \times A^2 \times B$$
$$+ (\text{-}2.231e\text{-}4) \times B^2$$
$$+ (\text{-}3.907e\text{-}4) \times A \times B^2$$
$$+ (2.308e\text{-}4 \quad) \times A^2 \times B^2$$

$$E = (\text{-}3.665 \quad) \quad\quad [4]$$
$$+ (15.87 \quad) \times A$$
$$+ (\text{-}12.17 \quad) \times A^2$$
$$+ (9.531e\text{-}2) \times B$$
$$+ (\text{-}4.237e\text{-}1) \times A \times B$$
$$+ (3.544e\text{-}1) \times A^2 \times B$$
$$+ (\text{-}6.102e\text{-}4) \times B^2$$
$$+ (2.905e\text{-}3) \times A \times B^2$$
$$+ (\text{-}2.469e\text{-}3) \times A^2 \times B^2$$

These equations permit the comparison of energy costs of the refrigeration system using the VSD with the measured energy costs of the refrigeration using the CSD without requiring the performance curves for the refrigeration system for either of the drives.

To calculate a cost savings for the refrigeration system 10 using the CSD 130 versus using the VSD, both the CSD design kW and the VSD design kW must be provided, as must the cost per kW-hr and the ECWT. For convenience, and to compare the results obtained from equations [1] and [3], the example of the 800 ton refrigeration system using R134a refrigerant is again used. Since this example for the refrigeration system was tested using a VSD, the CSD input kW value that was calculated using equation [1] is provided for use with equation [3]. Thus, the following values are provided: the design kW for the VSD is 530 kW, the design kW for the CSD is 508kW, the input CSD is 345kW and the ECWT is 72°F. Therefore the "A" term (input constant speed kW/CSD design kW) is 345kW divided by 508kW, or about 0.67. The "Y" term is 72. Substituting these values into equation [3] yields a value for "E" of about 0.56, which is the ratio of VSD input kW ("F") divided by the CSD design kW (E = 0.56 = F/530). This yields a value for the VSD input kW of about 297kW.

To double-check the results from the equation against the graphical data, refer to Figure 4, which is the constant speed curve using R134a refrigerant. Line "K" is the y-intercept extending from 0.67 (67%) horizontally to point "L". Point "L" is an interpolation between the 70°F and 75°F ECWT curves, since the ECWT was 72°F. Tracing a vertical line from point "J" to the x-intercept, point "H", yields approximately an 80% load. Refer now to Figure 5, which is the variable speed curve using R134a. Starting with the 80% load, point "G", a vertical line "M" is traced to point "F", which is also an interpolation between the 70°F and 75°F ECWT curves, since the ECWT was 72°F. Tracing a line "E" from point "F" to y-intercept, point "N", is 0.54, which is within about three percent of the ratio calculated for E above. It is noted that at least a portion of the three percent discrepancy between the calculated variable speed input kW of equation [3] or 0.56, may be compounded from equation [1], since the calculated results obtained by use of equation [3] were obtained from previous calculations using equation [1]. Therefore, this example confirms that equation [3] defines the relationship between the performance of the CSD and the VSD for the refrigeration system.

Figure 12 illustrates a flow chart detailing the control process of the present invention relating to cost comparison in a refrigeration system 10 as shown in Figure 13. The process begins in step 200 with inputting values into the control panel 40, such as the price per kW-hr, the variable speed design kW, the constant speed design kW. The variable speed design kW and the constant speed design kW are values set by the manufacturers at the time of commission of the refrigeration system, and are intended to be input by the installers. The price per kW-hr can be updated as required. The display screen of the control panel 40 is typically set to either "Total Energy Saved" or "Total Savings," both in United States Dollars. Preferably, this information can be input into a keypad provided with the control panel 40.

Once the values have been input into the control panel 40 in step 200, and the refrigeration system is enabled, in step 210 the control panel measures parameters, such as the ECWT or other values relating to operating performance. Preferably, the ECWT, in degrees Fahrenheit, is obtained from an analog input channel using a sensing device, such as a thermistor. This information, and other information may be provided directly to or obtained from the control panel 40. Additionally, in step 210, the input CSD kW data from the CSD, or an optional harmonic filter, is provided to the control panel 40 at predetermined time periods, such as every two seconds, since the input CSD kW data is subject to change in response to the cooling load as determined by the control panel 40.

After parameters have been measured, values are calculated in step 220 and stored in step 230. The stored values include not only the calculated values in step 220, but may also include measured parameters in step 210. A number of the values calculated in step 220 which are included below, are summarized by subject matter, and include a discussion of measuring, calculating and storing steps.

CSD kW-hr Meter

This calculation can be performed as follows: the CSD kW is transmitted from the CSD to the control panel once every two seconds. This value is added to the CSD kW Total. When this sum exceeds 1800 (3600 seconds per hour / 2 seconds per reading), since 1800 kW equals 1 kW-hr for this data collection rate, the CSD kW-hr Meter is incremented by one, and 1800 is subtracted from the CSD kW Total that corresponds to a partial kW-hr, which re-sets the partial kW-hr component of the CSD kW-hr Meter. The value of the CSD kW-hr Meter can be modified if the access level is properly set. Both the CSD kW-hr Meter and the CSD kW Total are preferably stored in memory. AAA

VSD kW-hr Meter

Every two seconds, the CSD kW shall be divided by the CSD design kW to get CSD % design kW. Using the ECWT and the equation, the VSD % design kW is determined. This is preferably multiplied by the VSD design kW to obtain the VSD kW. The VSD kW value is preferably added to the VSD kW Total. When this sum exceeds 1800 (3600 seconds per hour / 2 seconds per reading), since 1800 kW equals 1 kW-hr, the VSD kW-hr Meter is preferably incremented by one, and 1800 is preferably subtracted from the VSD kW Total that corresponds to a partial kW-hr, which re-sets the partial kW-hr component of the VSD kW-hr Meter. The value of the VSD kW-hr Meter can be modified if the access level is properly set. Both the VSD kW-hr Meter and the VSD kW Total are preferably stored in memory.

Although the examples show the present invention being used to compare a refrigeration system operating with a CSD with a refrigeration system operating with a VSD, it is also contemplated that two different VSDs could also be compared, i.e., a first VSD and a second VSD having a different configuration, or two different CSDs could be compared, i.e., a first CSD and a second CSD. These comparisons can be made so long as the equations corresponding to the operation of the drives to be compared are provided. It is also contemplated that more than two different drives of similar or different type could be compared.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A method for comparing costs associated with operating a refrigeration system using a first drive type (30,130) versus a second drive type (30,130), the method comprising the steps of:

   providing a refrigeration system using a first drive type (30,130);
   providing an equation to calculate operating cost of the refrigeration system using a second drive type, the equation incorporating at least one operating parameter of the refrigeration system;
   measuring (210) the at least one operating parameter of the refrigeration system;
   determining a cost associated with operation of the refrigeration system using the first drive type;

calculating (220) a cost associated with operation of the refrigeration system using the second drive type with the equation and the measured at least one operating parameter; and
comparing (230,240) the cost associated with operating the refrigeration system using the first drive type with the cost associated with operating the refrigeration system using the second drive type.

2. The method of claim 1 wherein the step of calculating a cost includes the step of:

determining an amount of energy required by the first drive type to operate the refrigeration system for a predetermined time.

3. The method of claim 2 wherein the step of calculating a cost further includes the step of:

calculating a ratio based on the amount of energy required by the first drive type divided by a predetermined amount of energy required for the first drive type; and
wherein the calculated ratio is incorporated into the equation.

4. The method of claim 3 wherein the first drive type is one of a constant speed drive and a variable speed drive and the second drive type is one of a constant speed drive and a variable speed drive.

5. The method of claim 4 wherein the first drive type is a constant speed drive and the second drive type is a variable speed drive.

6. The method of claim 4 wherein the first drive type is a variable speed drive and the second drive type is a constant speed drive.

7. The method of claim 1 wherein the step of providing an equation includes providing a polynomial.

8. The method of claim 7 wherein the step of providing a polynomial includes inputting values associated with operation of the refrigeration system.

9. The method of claim 1 wherein the at least one measured operating parameter is at least one parameter selected from the group consisting of temperature of a fluid entering a condenser, temperature of a fluid leaving a condenser, saturated condensing temperature and temperature differential between evaporator temperature and condenser temperature.

10. The method of claim 1 further comprising the steps of:

repeating the step of comparing the cost associated with operating the refrigeration system using the constant speed drive with the cost associated with operating the refrigeration system using the variable speed drive at a predetermined time interval for a predetermined time duration; and
storing results of repeated cost comparisons.

11. The method of claim 1 wherein the step of providing an equation includes providing a polynomial in the form $C1 + (C2 \times A) + (C3 \times A^2) + (C4 \times B) + (C5 \times A \times B) + (C6 \times A^2 \times B) + (C7 \times B^2) + (C8 \times A \times B^2) + (C9 \times A^2 \times B^2)$, wherein C1 through C9 are constants, A is a ratio of first drive type input kW to first drive type design kW and B is the at least one measured operating parameter.

12. The method of claim 11 wherein the at least one measured operating parameter is at least one parameter selected from the group consisting of temperature of a fluid entering a condenser, temperature of a fluid leaving a condenser, saturated condensing temperature and temperature differential between evaporator temperature and condenser temperature.

13. The method of claim 12 wherein the step of providing an equation includes determining constants C1 through C9 of the polynomial in response to a refrigerant used in the refrigeration system.

14. The method of claim 12 wherein the step of providing an equation includes determining constants C1 through C9 of the polynomial in response to a condenser fluid used in the refrigeration system.

**15.** The method of claim 12 wherein the step of providing an equation includes determining constants C1 through C9 of the polynomial in response to an evaporator fluid used in the refrigeration system.

**16.** The method of claim 15 wherein the evaporator fluids are selected from the group consisting of water, ethylene glycol, propylene glycol, calcium chloride brine and sodium chloride brine.

**17.** The method of claim 12 wherein the step of providing an equation includes determining constants C1 through C9 of the polynomial in response to a type of compressor used in the refrigeration system.

**18.** A refrigeration system comprising:

a refrigeration circuit having a compressor (60) driven by a motor (50), a condenser (70) and an evaporator (110) connected in a closed loop;
a first drive type (30,130) to drive the compressor motor;
at least one sensor to measure at least one operating parameter of the refrigeration circuit;
a computer system (40) comprising a microprocessor and a memory device and at least one computer program, the at least one computer program comprising:

means for calculating operating costs of the refrigeration circuit using the first drive type and a second drive type;
means for calculating (220) an amount of energy used by the first drive type in the refrigeration circuit for a predetermined time;
means for calculating (220) a first ratio based on the amount of energy used by the first drive type divided by a predetermined amount of energy required by the first drive type;
means for calculating (220) a second ratio based on the amount of energy required by the second drive type divided by a predetermined amount of energy required by the second drive type; and wherein the second ratio is determined from an equation having the first ratio and the at least one operating parameter as inputs to the equation.

**19.** The refrigeration system of claim 18 wherein the first drive type is a constant speed drive and the second drive type is a variable speed drive.

**20.** The refrigeration system of claim 18 wherein the first drive type is a variable speed drive and the second drive type is a constant speed drive.

**21.** The refrigeration system of claim 18 wherein the first drive type is a first constant speed drive and the second drive type is a second constant speed drive.

**22.** The refrigeration system of claim 18 wherein the first drive type is a first variable speed drive and the second drive type is a second variable speed drive.

**23.** The refrigeration system of claim 19 wherein the at least one computer program repeatedly compares the cost associated with operating the refrigeration circuit using the constant speed drive with the cost associated with operating the refrigeration circuit using the variable speed drive and stores results of comparisons.

**24.** The refrigeration system of claim 18 wherein the at least one measured operating parameter is selected from the group consisting of temperature of a fluid entering a condenser, temperature of a fluid leaving a condenser, saturated condensing temperature and temperature differential between an evaporator temperature and condenser temperature.

**25.** The refrigeration system of claim 19 wherein the equation is a polynomial.

**26.** The refrigeration system of claim 25 wherein the polynomial is in the form
$C1 + (C2 \times A) + (C3 \times A^2) + (C4 \times B) + (C5 \times A \times B) + (C6 \times A^2 \times B) + (C7 \times B^2) + (C8 \times A \times B^2) + (C9 \times A^2 \times B^2)$, wherein C1 through C9 are constants, A is a ratio of CSD input kW to CSD design kW and B is the at least one measured operating parameter.

**27.** The refrigeration system of claim 26 wherein the at least one measured operating parameter is selected from the group consisting of temperature of a fluid entering a condenser, temperature of a fluid leaving a condenser, saturated condensing temperature and temperature differential between an evaporator temperature and condenser temperature.

28. The refrigeration system of claim 26 wherein the constants C1 through C9 of the polynomial are determined in response to the refrigerant system using different refrigerants.

29. The refrigeration system of claim 26 wherein the constants C1 through C9 of the polynomial are determined in response to the refrigerant system using different condenser fluids.

30. The refrigeration system of claim 26 wherein the constants C1 through C9 of the polynomial are determined in response to the refrigerant system using a different type of compressor.

31. The refrigeration system of claim 26 wherein the constants C1 through C9 of the polynomial are determined in response to the refrigerant system using different evaporator fluids.

32. The refrigeration system of claim 31 wherein the evaporator fluids are selected from the group consisting of water, ethylene glycol, propylene glycol, calcium chloride brine and sodium chloride brine.

33. A method for comparing costs associated with operating a refrigeration system using a constant speed drive (130) versus a variable speed drive (30), the method comprising the steps of:

   providing a refrigeration system using a constant speed drive (130);
   providing an equation to calculate operating cost of the refrigeration system using a variable speed drive, the equation incorporating at least one operating parameter of the refrigeration system;
   measuring (210) the at least one operating parameter of the refrigeration system;
   determining a cost associated with operation of the refrigeration system using the constant speed drive;
   calculating (220) a cost associated with operation of the refrigeration system using the variable speed drive using the equation and the measured at least one operating parameter; and
   comparing (230, 240) the cost associated with operating the refrigeration system using the constant speed drive with the cost associated with operating the refrigeration system using the variable speed drive.

**Patentansprüche**

1. Verfahren zum Vergleichen von Kosten, die dem Betreiben eines Kühlsystems bei Verwendung eines ersten Antriebstyps (30, 130) im Vergleich zu einem zweiten Antriebstyp (30, 130) zugeordnet sind, wobei das Verfahren die Schritte umfasst:

   Bereitstellen eines Kühlsystems, das einen ersten Antriebstyp (30, 130) verwendet;
   Bereitstellen einer Gleichung zum Berechnen von Betriebskosten des Kühlsystems, das einen zweiten Antriebstyp verwendet, wobei die Gleichung mindestens einen Betriebsparameter des Kühlsystems einbezieht;
   Messen (210) des mindestens einen Betriebsparameters des Kühlsystems;
   Ermitteln von Kosten, die dem Betrieb des Kühlsystems bei Verwendung des ersten Antriebstyps zugeordnet sind;
   Berechnen (220) von Kosten, die dem Betrieb des Kühlsystems bei Verwendung des zweiten Antriebstyps zugeordnet sind, mit der Gleichung und dem gemessenen mindestens einen Betriebsparameter; und
   Vergleichen (230, 240) der Kosten, die dem Betreiben des Kühlsystems bei Verwendung des ersten Antriebstyps zugeordnet sind, mit den Kosten, die dem Betreiben des Kühlsystems bei Verwendung des zweiten Antriebstyps zugeordnet sind.

2. Verfahren nach Anspruch 1, wobei der Schritt des Berechnens von Kosten den Schritt beinhaltet:

   Ermitteln einer Energiemenge, die durch den ersten Antriebstyp benötigt wird, um das Kühlsystem eine vorgegebene Zeit lang zu betreiben.

3. Verfahren nach Anspruch 2, wobei der Schritt des Berechnens von Kosten ferner den Schritt beinhaltet:

Berechnen eines Verhältnisses, das auf der Energiemenge, die durch den ersten Antriebstyp benötigt wird, geteilt durch eine vorgegebene Energiemenge basiert, die für den ersten Antriebstyp benötigt wird; und wobei das berechnete Verhältnis in die Gleichung einbezogen wird.

**4.** Verfahren nach Anspruch 3, wobei der erste Antriebstyp einer eines Antriebs mit konstanter Drehzahl und eines Antriebs mit veränderlicher Drehzahl und der zweite Antriebstyp einer eines Antriebs mit konstanter Drehzahl und eines Antriebs mit veränderlicher Drehzahl ist.

**5.** Verfahren nach Anspruch 4, wobei der erste Antriebstyp ein Antrieb mit konstanter Drehzahl ist und der zweite Antriebstyp ein Antrieb mit veränderlicher Drehzahl ist.

**6.** Verfahren nach Anspruch 4, wobei der erste Antriebstyp ein Antrieb mit veränderlicher Drehzahl ist und der zweite Antriebstyp ein Antrieb mit konstanter Drehzahl ist.

**7.** Verfahren nach Anspruch 1, wobei der Schritt des Bereitstellens einer Gleichung das Bereitstellen eines Polynoms beinhaltet.

**8.** Verfahren nach Anspruch 7, wobei der Schritt des Bereitstellens eines Polynoms das Eingeben von Werten beinhaltet, die dem Betrieb des Kühlsystems zugeordnet sind.

**9.** Verfahren nach Anspruch 1, wobei der mindestens eine gemessene Betriebsparameter mindestens ein Parameter ist, der aus der Gruppe ausgewählt ist, die aus der Temperatur eines Fluids, das in einen Kondensator eintritt, der Temperatur eines Fluids, das aus einem Kondensator austritt, der Sättigungsverflüssigungstemperatur und der Temperaturdifferenz zwischen Verdampfertemperatur und Kondensatortemperatur besteht.

**10.** Verfahren nach Anspruch 1, das ferner die Schritte umfasst:

Wiederholen des Schritts des Vergleichens der Kosten, die dem Betreiben des Kühlsystems bei Verwendung des Antriebs mit konstanter Drehzahl zugeordnet sind, mit den Kosten, die dem Betreiben des Kühlsystems bei Verwendung des Antriebs mit veränderlicher Drehzahl zugeordnet sind, in einem vorgegebenen Zeitabstand für eine vorgegebene Zeitdauer und
Speichern von Ergebnissen wiederholter Kostenvergleiche.

**11.** Verfahren nach Anspruch 1, wobei der Schritt des Bereitstellens einer Gleichung das Bereitstellen eines Polynoms in der Form
$C1 + (C2 \times A) + (C3 \times A^2) + (C4 \times B) + (C5 \times A \times B) + (C6 \times A^2 \times B) + (C7 \times B^2) + (C8 \times A \times B^2) + (C9 \times A^2 \times B^2)$ beinhaltet, wobei C1 bis C9 Konstanten sind, A ein Verhältnis von Eingangs-kW-Wert des ersten Antriebstyps zum Auslegungs-kW-Wert des ersten Antriebstyps ist und B der mindestens eine gemessene Betriebsparameter ist.

**12.** Verfahren nach Anspruch 11, wobei der mindestens eine gemessene Betriebsparameter mindestens ein Parameter ist, der aus der Gruppe ausgewählt ist, die aus der Temperatur eines Fluids, das in einen Kondensator eintritt, der Temperatur eines Fluids, das aus einem Kondensator austritt, der Sättigungsverflüssigungstemperatur und der Temperaturdifferenz zwischen Verdampfertemperatur und Kondensatortemperatur besteht.

**13.** Verfahren nach Anspruch 12, wobei der Schritt des Bereitstellens einer Gleichung das Ermitteln von Konstanten C1 bis C9 des Polynoms in Reaktion auf ein Kühlmittel beinhaltet, das im Kühlsystem verwendet wird.

**14.** Verfahren nach Anspruch 12, wobei der Schritt des Bereitstellens einer Gleichung das Ermitteln von Konstanten C1 bis C9 des Polynoms in Reaktion auf ein Kondensatorfluid beinhaltet, das im Kühlsystem verwendet wird.

**15.** Verfahren nach Anspruch 12, wobei der Schritt des Bereitstellens einer Gleichung das Ermitteln von Konstanten C1 bis C9 des Polynoms in Reaktion auf ein Verdampferfluid beinhaltet, das im Kühlsystem verwendet wird.

**16.** Verfahren nach Anspruch 15, wobei die Verdampferfluide aus der Gruppe ausgewählt sind, die aus Wasser, Ethylenglykol, Propylenglykol, Calciumchloridsole und Natriumchloridsole besteht.

**17.** Verfahren nach Anspruch 12, wobei der Schritt des Bereitstellens einer Gleichung das Ermitteln von Konstanten C1 bis C9 des Polynoms in Reaktion auf einen Verdichtertyp beinhaltet, der im Kühlsystem verwendet wird.

18. Kühlsystem, das umfasst:

einen Kühlkreis, der einen Verdichter (60), der durch einen Motor (50) angetrieben ist, einen Kondensator (70) und einen Verdampfer (110) aufweist, die in einem geschlossenen Kreis verbunden sind;
einen ersten Antriebstyp (30, 130) zum Antreiben des Verdichtermotors;
mindestens einen Sensor zum Messen mindestens eines Betriebsparameters des Kühlkreises;
ein Computersystem (40), das einen Mikroprozessor und ein Speichergerät und mindestens ein Computerprogramm umfasst, wobei das mindestens eine Computerprogramm umfasst:

Mittel zum Berechnen von Betriebskosten des Kühlkreises bei Verwendung des ersten Antriebstyps und eines zweiten Antriebstyps;
Mittel zum Berechnen (220) einer Energiemenge, die durch den ersten Antriebstyp im Kühlkreis für eine vorgegebene Zeit gebraucht wird;
Mittel zum Berechnen (220) eines ersten Verhältnisses, das auf der Energiemenge, die durch den ersten Antriebstyp gebraucht wird, geteilt durch eine vorgegebene Energiemenge basiert, die durch den ersten Antriebstyp benötigt wird;
Mittel zum Berechnen (220) eines zweiten Verhältnisses, das auf der Energiemenge, die durch den zweiten Antriebstyp benötigt wird, geteilt durch eine vorgegebene Energiemenge basiert, die durch den zweiten Antriebstyp benötigt wird; und wobei das zweite Verhältnis aus einer Gleichung ermittelt wird, die das erste Verhältnis und den mindestens einen Betriebsparameter als Eingaben für die Gleichung aufweist.

19. Kühlsystem nach Anspruch 18, wobei der erste Antriebstyp ein Antrieb mit konstanter Drehzahl ist und der zweite Antriebstyp ein Antrieb mit veränderlicher Drehzahl ist.

20. Kühlsystem nach Anspruch 18, wobei der erste Antriebstyp ein Antrieb mit veränderlicher Drehzahl ist und der zweite Antriebstyp ein Antrieb mit konstanter Drehzahl ist.

21. Kühlsystem nach Anspruch 18, wobei der erste Antriebstyp ein erster Antrieb mit konstanter Drehzahl ist und der zweite Antriebstyp ein zweiter Antrieb mit konstanter Drehzahl ist.

22. Kühlsystem nach Anspruch 18, wobei der erste Antriebstyp ein erster Antrieb mit veränderlicher Drehzahl ist und der zweite Antriebstyp ein zweiter Antrieb mit veränderlicher Drehzahl ist.

23. Kühlsystem nach Anspruch 19, wobei das mindestens eine Computerprogramm wiederholt die Kosten, die dem Betreiben des Kühlkreises bei Verwendung des Antriebs mit konstanter Drehzahl zugeordnet sind, mit den Kosten vergleicht, die dem Betreiben des Kühlkreises bei Verwendung des Antriebs mit veränderlicher Drehzahl zugeordnet sind, und Ergebnisse der Vergleiche speichert.

24. Kühlsystem nach Anspruch 18, wobei der mindestens eine gemessene Betriebsparameter aus der Gruppe ausgewählt ist, die aus der Temperatur eines Fluids, das in einen Kondensator eintritt, der Temperatur eines Fluids, das aus einem Kondensator austritt, der Sättigungsverflüssigungstemperatur und der Temperaturdifferenz zwischen einer Verdampfertemperatur und einer Kondensatortemperatur besteht.

25. Kühlsystem nach Anspruch 19, wobei die Gleichung ein Polynom ist.

26. Kühlsystem nach Anspruch 25, wobei das Polynom in der Form
$C1+(C2{\times}A)+(C3{\times}A^2)+(C4{\times}B)+(C5{\times}A{\times}B)+(C6{\times}A^2{\times}B)+(C7{\times}B^2)+(C8{\times}A{\times}B^2)+(C9{\times}A^2{\times}B^2)$ ist, wobei C1 bis C9 Konstanten sind, A ein Verhältnis AKD-Eingangs-kW-Wert zum AKD-Auslegungs-kW-Wert ist und B der mindestens eine gemessene Betriebsparameter ist.

27. Kühlsystem nach Anspruch 26, wobei der mindestens eine gemessene Betriebsparameter aus der Gruppe ausgewählt ist, die aus der Temperatur eines Fluids, das in einen Kondensator eintritt, der Temperatur eines Fluids, das aus einem Kondensator austritt, der Sättigungsverflüssigungstemperatur und der Temperaturdifferenz zwischen einer Verdampfertemperatur und einer Kondensatortemperatur besteht.

28. Kühlsystem nach Anspruch 26, wobei die Konstanten C1 bis C9 des Polynoms in Reaktion darauf ermittelt werden, dass das Kühlmittelsystem unterschiedliche Kühlmittel verwendet.

**29.** Kühlsystem nach Anspruch 26, wobei die Konstanten C1 bis C9 des Polynoms in Reaktion darauf ermittelt werden, dass das Kühlmittelsystem unterschiedliche Kondensatorfluide verwendet.

**30.** Kühlsystem nach Anspruch 26, wobei die Konstanten C1 bis C9 des Polynoms in Reaktion darauf ermittelt werden, dass das Kühlmittelsystem einen unterschiedlichen Verdichtertyp verwendet.

**31.** Kühlsystem nach Anspruch 26, wobei die Konstanten C1 bis C9 des Polynoms in Reaktion darauf ermittelt werden, dass das Kühlmittelsystem unterschiedliche Verdampferfluide verwendet.

**32.** Kühlsystem nach Anspruch 31, wobei die Verdampferfluide aus der Gruppe ausgewählt sind, die aus Wasser, Ethylenglykol, Propylenglykol, Calciumchloridsole und Natriumchloridsole besteht.

**33.** Verfahren zum Vergleichen von Kosten, die dem Betreiben eines Kühlsystems bei Verwendung eines Antrieb mit konstanter Drehzahl (130) im Vergleich zu einem Antrieb mit veränderlicher Drehzahl (30) zugeordnet sind, wobei das Verfahren die Schritte umfasst:

Bereitstellen eines Kühlsystems, das einen Antrieb mit konstanter Drehzahl (130) verwendet;
Bereitstellen einer Gleichung zum Berechnen von Betriebskosten des Kühlsystems, das einen Antrieb mit veränderlicher Drehzahl verwendet, wobei die Gleichung mindestens einen Betriebsparameter des Kühlsystems einbezieht;
Messen (210) des mindestens einen Betriebsparameters des Kühlsystems;
Ermitteln von Kosten, die dem Betrieb des Kühlsystems bei Verwendung des Antriebs mit konstanter Drehzahl zugeordnet sind;
Berechnen (220) von Kosten, die dem Betrieb des Kühlsystems bei Verwendung des Antriebs mit veränderlicher Drehzahl zugeordnet sind, mithilfe der Gleichung und des gemessenen mindestens einen Betriebsparameters und
Vergleichen (40, 240) der Kosten, die dem Betreiben des Kühlsystems bei Verwendung des Antriebs mit konstanter Drehzahl zugeordnet sind, mit den Kosten, die dem Betreiben des Kühlsystems bei Verwendung des Antriebs mit veränderlicher Drehzahl zugeordnet sind.

**Revendications**

**1.** Méthode pour comparer les coûts associés au fonctionnement d'un système de réfrigération utilisant un premier type de régulation (30, 130) par rapport à un second type de régulation (30, 130), la méthode comprenant les étapes suivantes:

la fourniture d'un système de réfrigération utilisant un premier type de régulation (30, 130) ;
la fourniture d'une équation pour calculer le coût de fonctionnement du système de réfrigération utilisant un second type de régulation, l'équation comportant au moins un paramètre de fonctionnement du système de réfrigération ;
la mesure (210) de l'au moins un paramètre de fonctionnement du système de réfrigération ;
la détermination d'un coût associé au fonctionnement du système de réfrigération utilisant le premier type de régulation ;
le calcul (220) d'un coût associé au fonctionnement du système de réfrigération utilisant le second type de régulation au moyen de l'équation et de l'au moins un paramètre de fonctionnement mesuré ; et
la comparaison (230, 240) du coût associé au fonctionnement du système de réfrigération utilisant le premier type de régulation avec le coût associé au fonctionnement du système de réfrigération utilisant le second type de régulation.

**2.** Méthode selon la revendication 1, dans laquelle l'étape de calcul d'un coût comprend l'étape suivante :

la détermination d'une quantité d'énergie nécessaire au premier type de régulation pour faire fonctionner le système de réfrigération pendant une période de temps prédéterminée.

**3.** Méthode selon la revendication 2, dans laquelle l'étape de calcul d'un coût comprend en outre l'étape suivante:

le calcul d'un rapport sur la base de la quantité d'énergie nécessaire au premier type de régulation divisée par une quantité d'énergie prédéterminée nécessaire au premier type de régulation ; et
le rapport calculé étant intégré à l'équation.

4. Méthode selon la revendication 3, dans laquelle le premier type de régulation est l'un d'une régulation à vitesse constante ou d'une régulation à vitesse variable, et le second type de régulation est l'un d'une régulation à vitesse constante ou d'une régulation à vitesse variable.

5. Méthode selon la revendication 4, dans laquelle le premier type de régulation est une régulation à vitesse constante et le second type de régulation est une régulation à vitesse variable.

6. Méthode selon la revendication 4, dans laquelle le premier type de régulation est une régulation à vitesse variable et le second type de régulation est une régulation à vitesse constante.

7. Méthode selon la revendication 1, dans laquelle l'étape de la fourniture d'une équation comprend la fourniture d'un polynôme.

8. Méthode selon la revendication 7, dans laquelle l'étape de la fourniture d'un polynôme comprend la saisie de valeurs associées au fonctionnement du système de réfrigération.

9. Méthode selon la revendication 1, dans laquelle l'au moins un paramètre de fonctionnement mesuré est au moins un paramètre sélectionné dans le groupe composé de la température d'un fluide pénétrant dans un condenseur, de la température d'un fluide quittant un condenseur, de la température de condensation saturée et du différentiel de température entre la température de l'évaporateur et la température du condenseur.

10. Méthode selon la revendication 1, comprenant en outre les étapes suivantes:

la répétition de l'étape de la comparaison du coût associé au fonctionnement du système de réfrigération utilisant la régulation à vitesse constante avec le coût associé au fonctionnement du système de réfrigération utilisant la régulation à vitesse variable à un intervalle de temps prédéterminé et pour une période de temps prédéterminée ; et
l'enregistrement des comparaisons de coûts répétées.

11. Méthode selon la revendication 1, dans laquelle l'étape de la fourniture d'une équation comprend la fourniture d'un polynôme de la forme
$C1 + (C2 \times a) + (C3 \times A^2) + (C4 \times B) + (C5 \times A \times B) + (C6 \times A^2 \times B) + (C7 \times B^2) + (C8 \times A \times B^2) + (C9 \times A^2 \times B^2)$, dans lequel C1 à C9 sont des constantes, A est un rapport entre la puissance d'entrée en kW du premier type de régulation et la puissance calculée en kW du premier type de régulation, et B est l'au moins un paramètre de fonctionnement mesuré.

12. Méthode selon la revendication 11, dans laquelle l'au moins un paramètre de fonctionnement mesuré est au moins un paramètre sélectionné dans le groupe composé de la température d'un fluide pénétrant dans un condenseur, de la température d'un fluide quittant un condenseur, de la température de condensation saturée et du différentiel de température entre la température de l'évaporateur et la température du condenseur.

13. Méthode selon la revendication 12, dans laquelle l'étape de la fourniture d'une équation comprend la détermination des constantes C1 à C9 du polynôme en fonction d'un réfrigérant utilisé dans le système de réfrigération.

14. Méthode selon la revendication 12, dans laquelle l'étape de la fourniture d'une équation comprend la détermination des constantes C1 à C9 du polynôme en fonction d'un fluide du condenseur utilisé dans le système de réfrigération.

15. Méthode selon la revendication 12, dans laquelle l'étape de la fourniture d'une équation comprend la détermination des constantes C1 à C9 du polynôme en fonction d'un fluide de l'évaporateur utilisé dans le système de réfrigération.

16. Méthode selon la revendication 15, dans laquelle les fluides de l'évaporateur sont sélectionnés dans le groupe composé de l'eau, de l'éthylène glycol, du propylène glycol, de la saumure de chlorure de calcium, de la saumure de chlorure de sodium.

17. Méthode selon la revendication 12, dans laquelle l'étape de la fourniture d'une équation comprend la détermination des constantes C1 à C9 du polynôme en fonction d'un type de compresseur utilisé dans le système de réfrigération.

**18.** Système de réfrigération comprenant:

un circuit de réfrigération pourvu d'un compresseur (60) entraîné par un moteur (50), d'un condenseur (70) et d'un évaporateur (110) reliés en une boucle fermée ;
un premier type de régulation (30, 130) pour commander le moteur du compresseur ;
au moins un capteur pour mesurer l'au moins un paramètre de fonctionnement du circuit de réfrigération ;
un système informatique (40) comprenant un microprocesseur et un dispositif de mémoire et au moins un programme informatique, l'au moins un programme informatique comprenant :

des moyens pour calculer des coûts de fonctionnement du circuit de réfrigération utilisant le premier type de régulation et un second type de régulation ;
des moyens pour calculer (220) une quantité d'énergie utilisée par le premier type de régulation dans le circuit de réfrigération pendant une période de temps prédéterminée ;
des moyens pour calculer (220) un premier rapport sur la base de la quantité d'énergie utilisée par le premier type de régulation divisée par une quantité d'énergie prédéterminée nécessaire au premier type de régulation ;
des moyens pour calculer (220) un second rapport sur la base de la quantité d'énergie nécessaire au second type de régulation divisée par une quantité d'énergie prédéterminée nécessaire au second type de régulation ; et dans lequel le second rapport est déterminé à partir d'une équation dans laquelle le premier rapport et l'au moins un paramètre de fonctionnement font office de données pour l'équation.

**19.** Système de réfrigération selon la revendication 18, dans lequel le premier type de régulation est une régulation à vitesse constante et le second type de régulation est une régulation à vitesse variable.

**20.** Système de réfrigération selon la revendication 18, dans lequel le premier type de régulation est une régulation à vitesse variable et le second type de régulation est une régulation à vitesse constante.

**21.** Système de réfrigération selon la revendication 18, dans lequel le premier type de régulation est une régulation à vitesse constante et le second type de régulation est une seconde régulation à vitesse constante.

**22.** Système de réfrigération selon la revendication 18, dans lequel le premier type de régulation est une régulation à vitesse variable et le second type de régulation est une seconde régulation à vitesse variable.

**23.** Système de réfrigération selon la revendication 19, dans lequel l'au moins un programme informatique compare de manière répétée le coût associé au fonctionnement du circuit de réfrigération utilisant la régulation à vitesse constante avec le coût associé au fonctionnement du circuit de réfrigération utilisant la régulation à vitesse variable et enregistre des résultats des comparaisons.

**24.** Système de réfrigération selon la revendication 18, dans lequel l'au moins un paramètre de fonctionnement mesuré est sélectionné dans le groupe composé de la température d'un fluide pénétrant dans un condenseur, de la température d'un fluide quittant un condenseur, de la température de condensation saturée et du différentiel de température entre une température de l'évaporateur et une température du condenseur.

**25.** Système de réfrigération selon la revendication 19, dans lequel l'équation est un polynôme.

**26.** Système de réfrigération selon la revendication 25, dans lequel le polynôme est de la forme
$C1 + (C2 \times A) + (C3 \times A^2) + (C4 \times B) + (C5 \times A \times B) + (C6 \times A^2 \times B) + (C7 \times B^2) + (C8 \times A \times B^2) + (C9 \times A^2 \times B^2)$,
dans lequel C1 à C9 sont des constantes, A est un rapport entre la puissance d'entrée en kW de la régulation à vitesse constante et la puissance calculée en kW de la régulation à vitesse constante, et B est l'au moins un paramètre de fonctionnement mesuré.

**27.** Système de réfrigération selon la revendication 26, dans lequel l'au moins un paramètre de fonctionnement mesuré est sélectionné dans le groupe composé de la température d'un fluide pénétrant dans un condenseur, de la température d'un fluide quittant un condenseur, de la température de condensation saturée et du différentiel de température entre une température de l'évaporateur et une température du condenseur.

**28.** Système de réfrigération selon la revendication 26, dans lequel les constantes C1 à C9 du polynôme sont déterminées en fonction du fait que le système de réfrigération utilise différents réfrigérants.

**29.** Système de réfrigération selon la revendication 26, dans lequel les constantes C1 à C9 du polynôme sont déterminées en fonction du fait que le système de réfrigération utilise différents fluides de condenseur.

**30.** Système de réfrigération selon la revendication 26, dans lequel les constantes C1 à C9 du polynôme sont déterminées en fonction du fait que le système de réfrigération utilise un type de compresseur différent.

**31.** Système de réfrigération selon la revendication 26, dans lequel les constantes C1 à C9 du polynôme sont déterminées en fonction du fait que le système de réfrigération utilise différents fluides d'évaporateur.

**32.** Système de réfrigération selon la revendication 31, dans laquelle les fluides de l'évaporateur sont sélectionnés dans un groupe composé de l'eau, de l'éthylène glycol, du propylène glycol, de la saumure de chlorure de calcium, de la saumure de chlorure de sodium.

**33.** Méthode pour comparer les coûts associés au fonctionnement d'un système de réfrigération utilisant une régulation à vitesse constante (130) par rapport à une régulation à vitesse variable (30), la méthode comprenant les étapes suivantes :

la fourniture d'un système de réfrigération utilisant une régulation à vitesse constante (130) ;
la fourniture d'une équation pour calculer le coût de fonctionnement du système de réfrigération utilisant une régulation à vitesse variable, l'équation comportant au moins un paramètre de fonctionnement du système de réfrigération ;
la mesure (210) de l'au moins un paramètre de fonctionnement du système de réfrigération ;
la détermination d'un coût associé au fonctionnement du système de réfrigération utilisant la régulation à vitesse constante ;
le calcul (220) d'un coût associé au fonctionnement du système de réfrigération utilisant la régulation à vitesse variable au moyen de l'équation et de l'au moins un paramètre de fonctionnement mesuré ; et
la comparaison (230, 240) du coût associé au fonctionnement du système de réfrigération utilisant la régulation à vitesse constante avec le coût associé au fonctionnement du système de réfrigération utilisant la régulation à vitesse variable.

FIG..1

# Constant Speed
## 65 ECWT Computer Data Points
## (using R134a Refrigerant)

Legend: (TONS)
- 400
- 600
- 800
- 1000
- 1200
- 1400
- Fit

X-axis: % Load
Y-axis: % kW

FIG..2

**Variable Speed**
**65 ECWT Computer Data Points**
**(using R134a Refrigerant)**

*(TONS)*
-▫- 400
-◇- 600
-✳- 800
-▫- 1000
-△- 1200
-◇- 1400
-✳- Fit

EP 1 756 483 B1

FIG..3

Constant Speed
Curve Fitted Points by ECWT
(using R134a Refrigerant)

FIG..4

FIG..5

FIG..6

Constant Speed
65 ECWT Computer Data Points
(using R123 Refrigerant)

FIG..7

**Variable Speed
65 ECWT Computer Data Points
(using R123 Refrigerant)**

(TONS)
- 300
- 400
- 500
- 600
- 700
- 800
- Fit

% kW

% Load

EP 1 756 483 B1

FIG..8

**Constant Speed
Curve Fitted Points by ECWT
(using R123 Refrigerant)**

% kW

% Load

Legend: 95, 90, 85, 80, 75, 70, 65, 60, 55, 50, 45

EP 1 756 483 B1

FIG. 9

EP 1 756 483 B1

FIG..10

31

**Variable Speed** vs **Constant Speed**
Curve Fitted Points for ECWT
at 65 degrees Fahrenheit
(using R123 Refrigerant)

% kW

% Load

FIG. 11

FIG..12

FIG..13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6145328 A